## Europäisches Patentamt

## European Patent Office

## Office européen des brevets

(19)

(11) Publication number: 0 325 655

A1

# EUROPEAN PATENT APPLICATION

(12)

published in accordance with Art. 158(3) EPC

(21) Application number: 86902484.4

(22) Date of filing: 10.04.86

Data of the international application taken as a basis:

(86) International application number:
PCT/JP86/00177

(87) International publication number:
WO86/06135 (23.10.86 86/23)

(51) Int. Cl.³: F 01 L 7/10

(30) Priority: 10.04.85 JP 74516/85
30.09.85 JP 2163/84
30.09.85 JP 2163/86

(43) Date of publication of application:
02.08.89 Bulletin 89/31

(84) Designated Contracting States:
DE FR GB

(71) Applicant: HONDA GIKEN KOGYO KABUSHIKI KAISHA
1-1, Aoyama 2-chome
Minato-ku Tokyo 107(JP)

(72) Inventor: MATSUURA, Masaaki Kabushiki Kaisha Hond
Gijutsu Kenkyujo 4-1, Chuo 1-chome
Wako-shi Saitama-ken 351-01(JP)

(72) Inventor: NAKAMORI, Masaharu Kabushiki Kaisha
Honda
Gijutsu Kenkyujo 4-1, Chuo 1-chome
Wako-shi Saitama-ken 351-01(JP)

(72) Inventor: KUROKI, Masahiro Kabushiki Kaisha Honda
Gijutsu Kenkyujo 4-1, Chuo 1-chome
Wako-shi Saitama-ken 351-01(JP)

(72) Inventor: ISHIKAWA, Mitsuru Kabushiki Kaisha Honda
Gijutsu Kenkyujo 4-1, Chuo 1-chome
Wako-shi Saitama-ken 351-01(JP)

(74) Representative: MacFarlane, John Anthony
Christopher et al,
HASELTINE LAKE & CO. Hazlitt House 28, Southampton
Buildings Chancery Lane
London WC2A 1AT(GB)

(54) CONNECTING STRUCTRURE IN VALVE DRIVING MECHANISM FOR INTERNAL COMBUSTION ENGINES.

(57) In the suction and exhaust passages (7, 7', 8, 8'; 107, 108) communicated with a combustion chamber (6; 106) in an internal combustion engine (1; 101), rotary suction and exhaust valves (10, 10'; 20; 110, 110', 120; 210, 210') which are capable of opening and closing these suction and exhaust passages are provided, respectively. These rotary valves have spherical valve bodies (13, 13', 23; 113, 113', 123; 213, 213'), and the driving shafts (34, 36; 134; 234) of a valve driving mechanism (30), which is adapted to rotate the valve bodies in accordance with the movement of a piston (5; 105) in the internal combustion engine (1; 101), are joined to the valve bodies via connecting members (17, 18; 117, 118; 217, 218). In the case where a plurality of rotary suction valves and a plurality of rotary exhaust valves are provided, the valve bodies of the former valves and those of the latter valves are also joined to each other, respectively, via connecting members.

FIG.3

SPECIFICATION

## TITLE OF THE INVENTION

CONNECTING ARRANGEMENT IN VALVE OPERATING

SYSTEM FOR INTERNAL COMBUSTION ENGINE

## TECHNICAL FIELD

The present invention relates to a connecting arrangement for use in a valve operating system for an internal combustion engine.

## TECHNICAL SUBJECT

In general, in an internal combustion engine including rotary valves carried therein and each having a spherical valve body, the spherical valve bodies of the rotary valves are disposed in intake and exhaust passages at their opened ends closer to a combustion chamber, so that opening and closing of the intake and exhaust passages are carried out by rotating these valve bodies. The valve bodies are connected to drive shafts of a valve operating system, respectively and designed to be rotated by the rotation of the drive shafts.

With the above construction, a run out may be produced during rotation of the valve body due to a misalignment between the drive shaft and the spherical valve body in the assembling step and a processing error of recess provided in the cylinder head for containing the valve body.

To overcome such disadvantage, it is conceived that an Oldham's coupling is interposed as a separate connecting member between the drive shaft and the rotary valve. The Oldham's coupling is generally provided to have a predetermined clearance from a mating member to be connected in order to permit a relative movement between the Oldham's coupling and the mating member. However, when a drive force is transmitted from a drive member (a drive shaft in the present patent application) through the Oldham's coupling to a driven member, a collision occurs between adjacent members due to the clearance and therefore, a chipping and in its turn, a break down may be produced in the connected members due to a shock load. In this case, the rotary valve must be formed to have an increased strength higher than a strength functionally required, and a range of component materials selected is limited, bringing about an increase in weight and cost. In addition, it has been proposed that instead of the provision of such clearance, a buffer is interposed between the Oldham's coupling and the member which is to be connected. However, the presence of the buffer causes rotation from the drive side to be transmitted to the driven side with a misalignment of phases and moreover, a difference in phases of rotation is also caused to vary due to a variation in magnitude of a transmitting force. Thus, if such coupling is employed between the intake and exhaust rotary valves in an internal combustion engine, it is difficult to accurately move the rotary valves to an opened and closed positions in accordance with a cycle of operation.

DISCLOSURE OF THE INVENTION

The present invention has been accomplished with the foregoing in view, and it is an object of the present invention to provide a connecting arrangement in a valve operating system in an internal combustion engine, wherein a run out due to a misalignment between a spherical valve body of a rotary valve and a drive shaft during rotation of the valve body is absorbed to enhance a sealing property of the rotary valve, while uneven wearing of the valve body and a valve seat member is prevented to provide an improvement in performance and durability of the rotary valve and further, an influence of a shock load from the drive side on the rotary valve is reduced, enabling the rotary valve to be formed even from a material having a low strength.

To accomplish the above object, according to the present invention, there is provided a connecting arrangement in a valve operating system in an internal combustion engine, comprising a rotary valve for controlling the communication of a combustion chamber with a passage permitting either the supply of a mixed gas or the discharge of an exhaust gas by the turning movement of a spherical valve body, and a valve operating mechanism for driving the rotary valve interlockingly with the movement of a piston, wherein the valve body of the rotary valve and a drive shaft of the valve operating mechanism are interconnected for rotation in unison through an Oldham's coupling as a separate connecting member, and the Oldham's coupling comprises a first joint member tightly fitted in a recessed groove provided in an outer peripheral surface of the valve body, a second joint member tightly fitted in a recessed groove provided in one end surface of the drive shaft in a manner to be opposed to and offset in phase through $90^\circ$ from the aforesaid groove, and a third intermediate joint member provided with an engage hole engaged by the first and second joint members in an integrally assembled state, so that in a state of the first, second and third joint members integrally connected, the first and second joint members are permitted to relatively move in the engage hole in directions perpendicular to an axis of rotation of the drive shaft and perpendicular to each other.

Further, according to the present invention, there is provided a connecting arrangement in a valve operating system in an internal combustion engine, comprising a plurality of rotary valves for controlling the communication of a combustion chamber with a plurality of passages permitting either the supply of a mixed gas or the discharge of an exhaust gas by the turning movement of spherical valve bodies, respectively, and a valve operating mechanism for driving the rotary valves in unison interlockingly with the movement of a piston, wherein each of the plurality of valve bodies of the rotary valves and a drive shaft of the valve operating mechanism are interconnected for rotation in unison through an Oldham's coupling as a separate connecting member, and the Oldham's coupling comprises a first joint member tightly fitted in a recessed groove provided in an outer peripheral surface of the valve body of the rotary valve, a second joint member tightly fitted in a recessed groove provided in an outer peripheral surface of another rotary valve body or in one end surface of the drive shaft which is opposed to said groove in a manner to be offset in phase through 90° from said groove, and a third intermediate joint member provided with an engage hole engaged by the

— 4 —

first and second joint members in an integrally assembled state, so that in a state of the first, second and third joint members integrally connected, the first and second joint members are permitted to relatively move within the engage hole in directions perpendicular to an axis of rotation of the drive shaft and perpendicular to each other.

According to the present invention, the Oldham's coupling for connecting the spherical valve body with the drive shaft is constituted in the above-described manner and therefore, a run out during rotation of the valve body due to: a thermal strain produced in the valve bodies by a heat from the combustion chamber in the internal combustion engine; and a misalignment between the drive shafts and the valve bodies, can be absorbed by the interposition of the Oldham's couplings to enhance a sealing property and prevent an uneven wearing of the valve bodies and the valve seat members. In addition, the valve bodies and the drive shafts are securely connected with the Oldham's couplings to eliminate clearances from the connected portions, so that no collision occur between the connected portions of the valve bodies and the Oldham's couplings during transmission of a drive force from the drive shaft side, preventing
for arising of problems of a chipping and in its turn a break down. Accordingly, a range of materials selected for forming the valve body is widened, and for example, even if the valve body is formed of a brittle material such as ceramics, it is possible for the valve body to perform a reliable valve function over a long period.

Further, since the first and second joint members constituting the Oldham's coupling are integrally assembled to the third intermediate joint member for relative movement in directions perpendicular to the axis of rotation of the drive shaft and perpendicular to each other, a clearance between respective two of these joint members in a rotational direction is satisfactory if it permits such relative movement. Therefore, it is possible to minimize a difference in phases of rotation between the drive shaft and the valve body and to reliably move the rotary valve to opened and closed positions in accordance with a cycle of operation of the engine.

BRIEF DESCRIPTION OF THE DRAWINGS

The accompanying drawings illustrate one preferred embodiment of the present invention, wherein

Fig.1 is a vertical sectional view of an internal combustion engine to which this embodiment is applied;

Fig.2 is an end view of a combustion chamber in the internal combustion engine shown in Fig.1;

Fig.3 is a sectional view taken along a line III-III of Fig.1;

Fig.4 is an exploded perspective view of a valve body of a rotary valve and an Oldham's coupling as a connecting member;

Fig.5 is a perspective view of the Oldham's coupling assembled; and

Fig.6 is a schematic perspective view of a valve operating mechanism.

BEST MODE FOR CARRYING OUT THE INVENTION

One embodiment of the present invention will now be described with reference to the accompanying drawings.

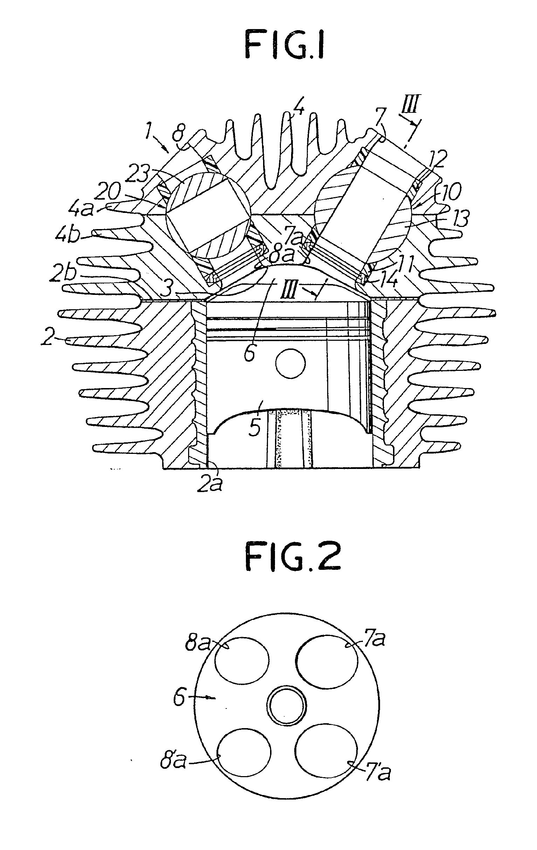

In Figures, the reference numeral 1 designates an internal combustion engine. A cylinder 2a is defined in a cylinder block of the internal combustion engine 1. A cylinder head upper half 4a and lower half 4b comprising two layers and overlaid on each other to constitute a cylinder head 4 are connected through a gascket 2b to an upper end of the cylinder block 2 by bolts or the like. The cylinder head lower half 4b has a recess 3 defined therein in an opposed relation to the cylinder 2a. A piston 5 is slidably received in the cylinder 2a, and when the piston 5 is at an upper dead point, a combustion chamber 6 is defined by an upper end surface of the piston 5 and the recess 3. The cylinder head upper half 4a is provided with two intake passages 7 and 7' and two exhaust passages 8 and 8' (only ones shown in Fig.1), and in the vicinity of the mated surfaces of the cylinder head upper and lower halves 4a and 4b, intake rotary valves 10 and 10' and exhaust rotary valves 20 ans 20' which will be described hereinbelow are disposed respectively at places to permit the communication of the intake passages 7 and 7' and the exhaust passages 8 and 8' with the combustion chamber 6.

It should be noted that in this embodiment, the intake and exhaust passages have been illustrated as being provided by twos, but they are not limited thereto. In addition, the intake passages 7 and 7' and the exhaust passages 8 and 8' have been provided in the cylinder head 4 in such a manner to be inclined with respect to the axis of the cylinder 2a so that their axes extend more apart from each other as they become away from the combustion chamber 6, but these passages 7, 7', 8 and 8' may be provided in the cylinder head 4 with their axes parallel to the axis of the cylinder 2a.

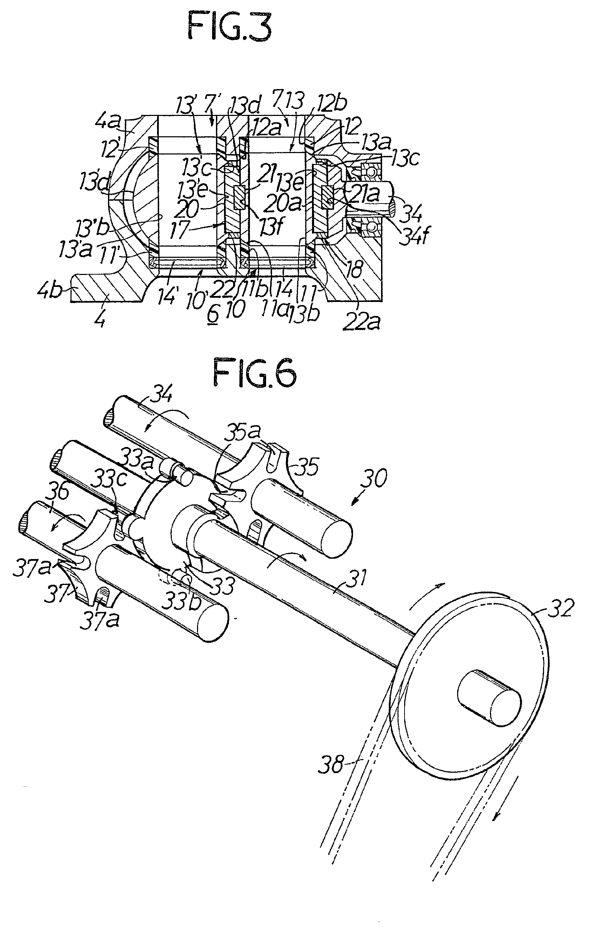

As shown in Fig.3, one of the intake rotary valves 10 comprises an upper valve seat member 12 disposed on the cylinder head upper half 4a, a lower valve seat member 11 disposed on the cylinder head lower half 4b, a valve body 13 held between valve seat members 12 and 11 and between the mated surfaces of the cylinder head upper and lower halves 4a and 4b, and a seal spring 14 interposed between the lower valve seat member 11 and the cylinder head lower half 4b for biasing the lower valve seat member 11 upwardly to hold the valve members 11 and 12 and the valve body 13 in contact with each other. The valve seat members 11 and 12 are each disk-shaped and have spherical depressed valve seat surfaces 11a and 12a provided at one opposed end surfaces with a predetermined radius of curvature, respectively. The valve seat members are centrally perforated with holes 11b and 12b each having a diameter approximately equal to an inside diameter of the intake passage 7. Each of the valve seat members 11 and 12 is formed of a material having excellent heat and wear resistances, such as a ceramic material.

The valve body 13 is substantially spherical, with its radius set at a value equal to the radius of curvature of the valve seat surfaces 11a and 12a, and an outer peripheral surface 13a of the valve body 13 is formed to come into close contact with the individual valve seat surfaces 11a and 12a. The valve body 13 is diametrically perforated with

- 8 -

a bore 13b having a diameter substantially equal to the inside diameter of the intake passage 7. The valve body 13 has an outer peripheral surface 13a notched at two places on one diametrical line perpendicular to an axis of the bore 13b to form a pair of side walls 13c and 13d having circular flat surfaces parallel to each other. Recessed grooves 13e and 13f are diametrically provided in the side walls 13c and 13d, respectively and lie with their phases displaced through $90^\circ$ from each other. The rotary valve 10 shuts off the individual holes 11b and 12b in the valve seat members 11 and 12 by the outer peripheral surface 13a of the valve body 13 when it is in a closed position, and permits the communication of the bore 13 in the valve body 13 with the individual holes 11b and 12b in the valve seat members 11 and 12 when it is in an opened position. For every rotation of the valve body 13 through $90^\circ$, the rotary valve 10 alternately assumes the closed and opened positions.

The other outermost intake rotary valve 10' spaced apart from a drive shaft 34 is constituted substantially in the same manner as the above-described one rotary valve 10, except that the intake rotary valve 10' does not have two side walls as the one rotary valve 10 has, and only at one end side of the valve body 13' in one diametrical direction perpendicular to an axis of a hole 13'b perforated in the valve body 13', i.e., only at the side closer to the rotary valve 10, an outer peripheral surface 13'a of a valve body 13 is notched to form a side wall 13'c providing a circular flat surface. The opposite end is not processed in any way and hence provides a spherical side wall 13'd forming a portion of the outer peripheral surface 13'a. A recessed groove 13'e is diametrically provided in the side wall 13'c. The aforesaid three side walls 13c, 13d and 13'c are preferably formed into circular surfaces having the same diameter, respectively. The two valve bodies 13 and 13' are arranged in a row within the cylinder head 14 with the bores 13b and 13'b parallel to each other, as shown in Fig.3, so that the side wall 13d of the valve body 13 is opposed to the side wall 13' of the valve body 13' at a predetermined distance spaced apart from each other. Both of the valve bodies are connected by an Oldham's coupling 17 as a connecting member.

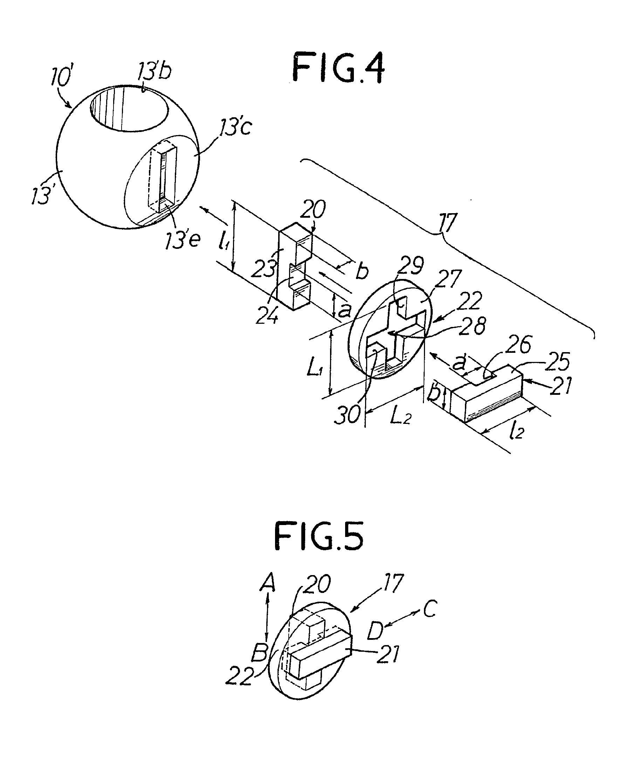

Fig.4 is an exploded view of the Oldham's coupling 17 and the valve body 13' of the one intake rotary valve 10'. The Oldham's coupling 17 comprises a plurality of components. More specifically, the Oldham's coupling 17 comprises a first joint member 20, a second joint member 21 and a third intermediate joint member 22. The first joint member 20 comprises a rectangular plate 23 and is notched at a longitudially central portion at one side thereof into a square configuration to define an engage groove 24. The second joint member 21 comprises a rectangular plate 25 and is notched at a longitudially central portion at one side thereof into a square configuration to define an engage groove 25. An opened dimension $a$ of the engage groove 24 in the first joint member 20 is slightly larger than a thickness dimension $b'$ of the second joint member 21, and an opened dimension $a'$ of the engaging groove 26 in the second joint member 21 is slightly larger than a thickness dimension $\underline{b}$ of the first joint member 20.

The third intermediate joint member 22 comprises a circular plate 27 which is centrally provided with a cross-shaped engage hole 28. A dimension L1 in length of one 29 of two hole portions forming the cross shape of the engage hole 28 is larger than a dimension l1 in length of the first joint member 20, and a dimension L2 in length of the other hole portion 30 is larger than a demension l2 in length of the second joint member 21.

The first and second joint members 20 and 21 are crosswise bound in an intersected relationship at 90° to each other by bringing the engage grooves 24 and 26 therein into engagement with each other and then, thus-bound joint members are engaged into the engage hole 28 in the third intermediate joint member 22, whereby the Oldham's coupling 17 is constituted as the connected member as shown in Fig.5. Thus, the first jpoint member 20 is movable a predetermined distance within the one hole portion 29 of the engage hole 28 in the third intermediate joint member 22 in a direction (which is its own longitudinal direction) indicated by an arrow AB in Fig.5, i.e., in a direction perpendicular to the axis of the drive shaft 34 connected, and the second joint member 21 is movable a predetermined distance within the other hole portion 30 of the engage hole 28 in a direction (which is its own longitudinal direction) indicated by an arrow CD in Fig.5, i.e., in a direction perpendicular to both of the axis of the drive shaft 34 and the aforesaid direction AB, so that such movements of the first and second

- 11 -

joint members enable the effective absorption of the relative displacement between the centers of rotation of the valve bodies of the two rotary valves and the axis of rotation of the drive shaft, which will be described hereinafter.

It is to be noted that an Oldham's coupling 18 for connecting the one valve body 13 with the drive shaft 34 is of the completely same construction as the aforesaid Oldham's coupling 17.

Now, description will be made of a mode of connection between the valve bodies 13 and 13' and between the valve body 13 and the drive shaft 34. Between the valve bodies 13 and 13', the first joint member 20 of the Oldham's coupling 17 is tightly fitted with no clearance into the recessed groove 13'e and the second joint member 21 is likewise tightly fitted with no clearance into the recessed groove 13f in the valve body 13 to realize an Oldham's connection between the both valve bodies 13 and 13'. In addition, between the valve body 13 and the drive shaft 34, a first joint member 20a of the Oldham's coupling 18 is tightly fitted with no clearance into the recessed groove 13e in the valve body 13 and a second joint member 21a is tightly fitted with no clearance into the recessed groove 34f in the drive shaft 34 to provide an Oldham's connection between both of the valve body 13 and the drive shaft 34.

In this way, the valve body 13 and the valve body 13' as well as the valve body 13 and the drive shaft 34 are interconnected respectively by the Oldham's couplings 17 and 18 for relative movement to some extent in a direction perpendicular to the rotational axis of the drive shaft 34.

In the Oldham's couplings 17 and 18, the first and second joint members 20 and 21; 20a and 21a are movable relative to the third intermediate joint member 22 and 22a, but are unmovable relative to the valve bodies 13 and 13' in which they are respectively fitted and the drive shaft 34, because they are held in fixed states due to no clearance. Therefore, any clearance is provided between the receesed grooves 13e, 13f and 13'e in the valve bodies 13 and 13' as well as the recessed groove 34f in the drive shaft 34 and the respective first and second joint members 20 and 21; 20a and 21a of the Oldham's couplings 17 and 18, so that in the rotational movement, collision cannot occur to apply any shock to the recessed grooves 13'e, 13f, 13e and 34f in the valve bodies 13 and 13' and the drive shaft 34. such collision occurs only between the first, second and third joint members of the Oldham's couplings 17 and 18 and hence, it suffices that these Oldham's couplings are formed from a material having a high strength.

Therefore, a misalignment in rotational center between the valve bodies 13 and 13' and a misalignment between the rotational center of the valve body 13 and the rotational axis of the drive shaft 34 can be compensated for by the movements of the first joint members 20 and 20a and the second joint members 21 and 21a within the third joint members 22 and 22a in the longitudinal direction. Accordingly, even if the valve bodies 13 and 13' are formed of a ceramic or the like, it is possible to avoid the arising of the problems of pitching due to a shock load and in its turn, breaking.

It should be noted that in the Aforesaid Oldham's coulping, if the first and second joint members are assembled to the third intermediate joint member with a certain clearance between the first and second joint members in the direction of the rotational axis, the two valve bodies and the drive shaft are interconnected with a three-dimensional freedom in the relative movement.

The two exhaust rotary valves 20 and 20' disposed in the exhaust passages 8 and 8' are constructed in the same manner as in the above-described intake rotary valves 10 and 10'.

Fig.6 illustrates one example of a valve operating mechanism for driving the rotary valves. This valve operating mechanism 30 comprises, for example, a Geneva stop mechanism. A sprocket 32 is secured to one end of a primary shaft 31 rotatably journaled on the cylinder head 4 and is connected through a chain 38 to a sprocket secured to one end of a crank shaft (both of the latter two not shown). A gear ratio between the sprocket 32 and the sprocket of that crank shaft is of 2 : 1, so that the primary shaft 31 may be rotated in one rotation for every two rotations of the crank shaft. A drive wheel 33 is secured to the other end of the primary shaft 31. An intake rotary valve opening pin 33a and closing pin 33b are embedded in a peripheral edge on one end surface of the drive wheel 33 at a distance spaced apart from each other on the same circumference, and an exhaust rotary valve opening pin 33c and closing pin (not shown) are also embedded in a peripheral edge on the other end surface at a distance spaced apart from each other on the same circumference.

The drive shafts 34 and 36 are rotatably journaled on the cylinder head 4 and have driven wheels 35 and 37 secured to one ends thereof, respectively. Four radial grooves 35a and 37a are provided in the driven wheels 35 and 37 at angular uniform intervals circumferentially spaced apart through 90°. The intake rotary valve opening and closing pins 33a and 33b of the drive wheel 33 are adapted to successively engage the individual grooves 35a in the driven wheel 35 with the rotation thereof, and the exhaust rotary valve opening pin 33c and closing pin (not shown) are adapted to successively engage the individual grooves 37a in the driven wheel 37. The drive shaft 34 has the recessed groove 34a provided in the other end surface thereof and shown in Fig.3, as described above. The groove 34a is engaged by a protrusion 18a of the connecting member 18. The drive shaft 36 is also integrally connected, at its one end closer to the exhaust rotary valve, to the valve body of the exhaust rotary valve 20 through a connecting member (not shown) by the Oldham's coupling in the same manner as in the drive shaft 45.

Description will now be made of the operation of this embodiment.

The primary shaft 31 of the valve operating mechanism 30 is rotated in the clockwise direction as shown in Fig.6 with the rotation of the crank shaft (not shown) to cause the driven wheel 35 to rotate through 90° in the counterclockwise direction for a period of time from the instant of

- 15 -

engagement of the pin 33a of the drive shaft 33 in the selected groove 35a to the instant of slipping-out of the pin 33a therefrom. With this rotation, the valve bodies 13 and 13' of the intake rotary valves 10 and 10' are rotated in unison through 90° in the counterclockwise direction. The rotary valves 10 and 10' begin their own opening motion from the instant when the pin 33a has engaged the groove 35a, and are completely opened when the pin 33a has been slipped out of the groove 35a. The drive wheel 33 is further rotated to cause the driven wheel 35 to rotate through 90° in the counterclockwise direction for a period of time from the instant when the pin 33b has engaged the next groove 35a in the driven wheel 35 to the instant when the pin 33b has been slipped out of such groove. With this rotation, the valve bodies 13 and 13' are also rotated further through 90° in the counterclockwise direction. The intake rotary valves 10 and 10' begin their own closing motion from the instant when the pin 33b has engaged the groove 35a, and are completely closed when the pin 33b has been slipped out of such groove 35a. The rotary valves 10 and 10' are held in the fully opened states for a predetermined period of time from the completion of the opening operation to the starting of the closing operation.

The drive wheel 33 is yet further rotated to cause the driven wheel to be further rotated through 90° in the counterclockwise direction for a period of time from the instant when the pin 33a has been fitted into the next groove 35a of the driven wheel 35 to the instant when the pin 33a has been slipped out of such groove, and with this

- 16 -

rotation, the rotary valves 10 and 10' are opened again. The rotary valves 10 and 10' are held in the fully closed states for a predetermined period of time from the instant when the above-mentioned closing operation has been completed to the instant when the opening operation has been started. Upon rotation of the drive wheel 33 in the clockwise direction in this manner, the driven wheel 35 is intermittently rotated in the counterclockwise direction to provide the intermittent rotational driving of the drive shaft 34, so that the rotary valves 10 and 10' are therewith controlled in opening and closing and stopped in the fully opened and closed positions for a predetermined period of time. The drive shaft 34 is rotated in on rotation for every two rotations of the primary shaft 31.

The exhaust rotary valves are controlled to be opened and closed through the drive wheel 33 by the drive shaft 36 in the same manner as in the intake rotary valves 10 and 10' and are stopped in the fully opened and closed positions for a predetermined period of time. It is of course that these intake and exhaust rotary valves are preset so that they may be controlled in opening and closing with a predetermined timing in accordance with an engine cycle.

The Geneva stop mechanism has been described as being used as a valve operating mechanism in the present embodiment, but it is to be understood that the valve operating mechanism is not limited thereto and for example, a cam type valve operating mechanism for reciprocally turning the rotary valves within a given angle may be employed.

In addition, the means for driving the rotary valves has been described as being of the chain type for directly driving the rotary valves through the rotation of the crank shaft, but the means is not limited thereto and for example, other means may be employed such as a step motor for electrically driving the rotary valves in accordance with the rotation of the crank shaft.

WHAT IS CLAIMED IS

1.   A connecting arrangement in a valve operating system in an internal combustion engine (1), comprising a rotary valve (10, 20) for controlling the communication of a combustion chamber (6) with a passage (7, 8) permitting either the supply of a mixed gas or the discharge of an exhaust gas by the turning movement of a spherical valve body, and a valve operating mechanism (30) for driving said rotary valve interlockingly with the movement of a piston(5), wherein said valve body of the rotary valve and a drive shaft (34, 36) of said valve operating mechanism are interconnected for rotation in unison through an Oldham's coupling (18) as a separate connecting member, and said Oldham's coupling comprises    a first joint member (20a) tightly fitted in a recessed groove (13e) provided in an outer peripheral surface of said valve body, a second joint member (21a) tightly fitted in a recessed groove (34f) provided in one end surface of said drive shaft (34) in a manner to be opposed to and   offset   in phase through $90^{\circ}$ from said groove (13e), and a third intermediate joint member (22a) provided with an engage hole (28) engaged by said first and second joint members in an integrally assembled state, so that in a state of the first, second and third joint members integrally connected, said first and second joint members (20a, 21a) are permitted to relatively move in said engage hole (28) in directions perpendicular to an axis of rotation of said drive shaft (34, 36) and perpendicular to each other.

2.   A connecting arrangement in a valve operating system in an internal combustion engine (1), comprising a plurality of rotary valves (10, 10', 20) for controlling the communication of a combustion chamber (6) with a plurality of passages (7, 7', 8, 8') permitting either the supply of a mixed gas or the discharge of an exhaust gas by the turning movement of spherical valve bodies (13, 13', 23), respectively, and a valve operating mechanism (30) for driving said rotary valves in unison interlockingly with the movement of a piston (5), wherein each of the plurality of valve bodies of said rotary valves and a drive shaft (34, 36) of said valve operating mechanism are interconnected for rotation in unison through an Oldham's coupling (17, 18) as a separate connecting member, and said Oldham's coupling comprises a first joint member (20a, 20) tightly fitted in a recessed groove (13e, 13'e) provided in an outer peripheral surface of said valve body of the rotary valve, a second joint member (21a, 21) tightly fitted in a recessed groove (13f, 34f) provided in an outer peripheral surface of another rotary valve body (13) or in one end surface of said drive shaft (34) which is opposed to said groove (13e, 13'e) in a manner to be misaligned in phase through 90$^{\circ}$ from said groove, and a third intermediate joint member (22a, 22) provided with an engage hole (28) engaged by said first and second joint members in an integrally assembled state, so that in a state of the first, second and third joint members integrally connected, said first and second joint members (20a, 21a) are permitted to relatively move within said engage hole (28) in directions perpendicular to an axis of rotation of said drive shaft (34, 36) and perpendicular to

- 20 -

each other.

3. A connecting arrangement in a valve operating system in an internal combustion engine according to claim 1, wherein said passage comprises an intake passage (7, 7') and an exhaust passage (8, 8'); said rotary valve comprises an intake rotary valve (10, 10') for controlling the communication between said intake passage and said combustion chamber and an exhaust rotary valve (20) for controlling the communication between said exhaust passage and said combustion chamber; and said valve operating mechanism has two drive shafts correspondingly to said intake and exhaust rotary valves.

4. A connecting arrangement in a valve operating system in an internal combustion engine according to claim 3, wherein a plurality of said intake passages are provided, and a plurality of said intake rotary valves are provided correspondingly to said intake passages.

5. A connecting arrangement in a valve operating system in an internal combustion engine according to claim 4, wherein a plurality of said exhaust passages are provided, and a plurality of said exhaust rotary valves are provided correspondingly to said exhaust passages.

6. A connecting arrangement in a valve operating system in an internal combustion engine according to claim 2, wherein said passages comprise a plurality of intake passages (7, 7') and at least one exhaust passage (8, 8'); said rotary valves comprise a plurality of intake rotary valves (10, 10') and at least one exhaust rotary valve (20) in corresponding relationship to said intake and exhaust passages; and said

- 21 -

valve operating mechanism has two drive shafts mounted in corresponding relationship to said intake and exhaust rotary valves.

7. A connecting arrangement in a valve operating system in an internal combustion engine according to claim 1, wherein said first joint member (20a) comprises a rectangular plate; said second joint member (21a) comprises a rectangular plate engageable with said first joint member in cross-shaped configuration; and the engage hole (28), in said third intermediate joint member (22a), which is engageable by said first and second joint members, is cross-shaped and sized to permit said first and second joint members to move within the engage hole in their respective longitudial directions.

8. A connecting arrangement in a valve operating system in an internal combustion engine according to claim 2, wherein said first joint member (20, 20a) comprises a rectangular plate; said second joint member (21, 21a) comprises a rectangular plate engageable with said first joint member in cross-shaped configuration; and the engage hole (28), in said third intermediate joint member (22, 22a), which is engageable by said first and second joint members, is cross-shaped and sized to permit said first and second joint members to move within said engage hole in their respective longitudial directions.

9. A connecting arrangement in a valve operating system in an internal combustion engine according to claim 7, wherein said first joint member (20a) is provided with an engage groove engageable by the second joint member (21a), and said second joint member is provided with an engage groove engageable by the first joint member, said engage grooves being larger than the engaged portion of the mating joint member.

10. A connecting arrangement in a valve operating system in an internal combustion engine according to claim 8, wherein said first joint member (20, 20a) is provided with an engage groove (24) engageable by the second joint member (21, 21a), and said second joint member (21, 21a) is provided with an engage groove (26) engageable by the first joint member (20, 20a), said engage grooves being larger than the engaged portion of the mating joint member (21, 21a; 20, 20a).

# FIG.1

# FIG.2

# FIG.3

# FIG.6

# FIG.4

# FIG.5

0325655

**I. CLASSIFICATION OF SUBJECT MATTER** (if several classification symbols apply, indicate all) [3]

According to International Patent Classification (IPC) or to both National Classification and IPC

Int.Cl[4]   F01L7/10

**II. FIELDS SEARCHED**

Minimum Documentation Searched [4]

| Classification System | Classification Symbols |
|---|---|
| IPC | F01L7/00-7/18<br>F16K31/44, F16K11/087<br>F16D3/04 |

Documentation Searched other than Minimum Documentation
to the Extent that such Documents are Included in the Fields Searched [5]

| | |
|---|---|
| Jitsuyo Shinan Koho | 1926 - 1985 |
| Kokai Jitsuyo Shinan Koho | 1971 - 1985 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| A | JP, U, 56-92706 (Niigata Tekkosho Kabushiki Kaisha) 23 July 1981 (23. 07. 81) Fig. 1 (Family: none) | 1 - 16 |
| A | US, A, 3.730.161 (Harold A. Bishop) 1 May 1973 (01. 05. 73) Column 4, line 66 to column 5, line 12, Fig. 2, | 1 - 16 |
| Y | JP, U, 58-148372 (Yakura Kazuyuki and five others) 5 October 1983 (05. 10. 83) (Family: none) | 1 - 12 |
| Y | JP, A, 55-107122 (Bariu Light Corp.) 16 August 1980 (16. 08. 80) Page 3, column 4, line 10 to page 4, column 1, line 8 & FR, A, 2448657 & GB, A, 2041494 & US, A, 4.286.442 & DE, A, 2942600 | 9 - 12 |

* Special categories of cited documents: [15]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

**IV. CERTIFICATION**

| Date of the Actual Completion of the International Search [2] | Date of Mailing of this International Search Report [2] |
|---|---|
| May 19, 1986 (19. 05. 86) | June 9, 1986 (09. 06. 86) |

| International Searching Authority [1] | Signature of Authorized Officer [10] |
|---|---|
| Japanese Patent Office | |

Form PCT/ISA/210 (second sheet) (October 1981)

0325655

International Application No. PCT/JP86/00177

| FURTHER INFORMATION CONTINUED FROM THE SECOND SHEET | | |
|---|---|---|
| Y | JP, A, 52-74126 (Shiraishi Mitsutoshi)<br>21 June 1977 (21. 06. 77)<br>Page 2, column 1, Fig. 1, Fig. 2<br>(Family: none) | 1 - 12 |

**V.☐ OBSERVATIONS WHERE CERTAIN CLAIMS WERE FOUND UNSEARCHABLE**[10]

This international search report has not been established in respect of certain claims under Article 17(2) (a) for the following reasons:

1.☐ Claim numbers_____, because they relate to subject matter [12] not required to be searched by this Authority, namely:

2.☐ Claim numbers_____, because they relate to parts of the international application that do not comply with the prescribed requirements to such an extent that no meaningful international search can be carried out [13], specifically:

**VI.☐ OBSERVATIONS WHERE UNITY OF INVENTION IS LACKING**[11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.